# EUROPÄISCHE PATENTANMELDUNG

(11) **EP 3 702 300 A1**
(43) Veröffentlichungstag der Anmeldung: **02.09.2020**
(21) Anmeldenummer: 20159075.9
(22) Anmeldetag: 24.02.2020
(51) Int. Cl.: B65G 45/18, A46B 13/00

(54) **REINIGUNGSBÜRSTE FÜR EIN FÖRDERBAND**

(30) Priorität: 27.02.2019 AT 5002619 U; 04.10.2019 AT 5017519 U
(71) Anmelder: Hoessl GmbH, 4210 Gallneukirchen (AT)
(72) Erfinder: Hoessl, Peter, 4210 Gallneukirchen (AT)
(74) Vertreter: Hübscher & Partner Patentanwälte GmbH

(57) **Zusammenfassung**

Es wird eine Reinigungsbürste für ein Förderband (3) mit einem Tragrohr (6) und einem Bürstenzylinder (7) beschrieben, der einen das Tragrohr (6) umschließenden Mantel (8) und einen von diesem Mantel (8) abstehenden Bürstenbesatz (9) umfasst. Um einfache Handhabungsbedingungen zu schaffen, wird vorgeschlagen, dass der Mantel (8) des Bürstenzylinders (7) entlang einer Erzeugenden geteilt ist und entweder entlang des axialen Teilungsstoßes (10) miteinander lösbar verbundene Schließstege (11) aufweist oder an den einander gegenüberliegenden Teilungsenden gegeneinander auf Lücke versetzte, kammartig ineinandergreifende Scharnieransätze (17, 18) bildet, die in axialer Richtung fluchtende Lageraugen (19) zur lösbaren Aufnahme eines Scharnierbolzens (20) aufweisen.

## Beschreibung

Die Erfindung bezieht sich auf eine Reinigungsbürste für ein Förderband mit einem Tragrohr und einem Bürstenzylinder, der einen das Tragrohr umschließenden Mantel und einen von diesem Mantel abstehenden Bürstenbesatz umfasst.

Zum Reinigen von Förderbändern werden in Abhängigkeit vom Fördergut auch Reinigungsbürsten eingesetzt, die einem Verschleiß unterliegen und daher ausgewechselt werden müssen. Um einen einfacheren Bürstenwechsel zu ermöglichen, ist es bekannt (DE 26 21 550 A1), die Bürstenwelle in einer Schwinge zu lagern, mit deren Hilfe die Reinigungsbürste zum Wechsel vom Förderband weggeschwenkt werden kann, sodass für den Ausbau der Bürstenwelle entsprechend Raum geschaffen wird. Trotz dieser Maßnahme bleibt der für das Wechseln der Reinigungsbürste erforderliche Aufwand erheblich, weil die Lager für die Welle der Reinigungsbürste geöffnet bzw. von der Bürstenwelle abgezogen werden müssen.

Der Erfindung liegt somit die Aufgabe zugrunde, eine Reinigungsbürste für ein Förderband so auszugestalten, dass ein Bürstenwechsel mit einem vergleichsweise geringen Handhabungsaufwand sichergestellt werden kann.

Ausgehend von einer Reinigungsbürste der eingangs geschilderten Art löst die Erfindung die gestellte Aufgabe dadurch, dass der Mantel des Bürstenzylinders entlang einer Erzeugenden geteilt ist und entweder entlang des axialen Teilungsstoßes miteinander lösbar verbundene Schließstege aufweist oder an den einander gegenüberliegenden Teilungsenden gegeneinander auf Lücke versetzte, kammartig ineinandergreifende Scharnieransätze bildet, die in axialer Richtung fluchtende Lageraugen (8) zur lösbaren Aufnahme eines Scharnierbolzens (9) aufweisen.

Durch die Teilung des Mantels des Bürstenzylinders entlang einer Erzeugenden werden die Voraussetzung für ein Abnehmen des Bürstenzylinders vom Tragrohr in radialer Richtung geschaffen, sodass die Bürstenlagerung durch den Bürstenwechsel nicht betroffen ist. Der entlang einer Erzeugenden geteilte Mantel des Bürstenzylinders kann ja durch ein Aufspreizen dieses Mantels nicht nur radial vom Tragrohr gelöst, sondern auch in radiale Richtung auf das Tragrohr aufgebracht werden. Es ist lediglich dafür Sorge zu tragen, dass der geteilte Mantel um das Tragrohr geschlossen werden kann. Dies ist mithilfe von entlang des axialen Teilungsstoßes verlaufenden Schließstegen einfach möglich, weil die randseitigen Schließstege des Mantels des Bürstenzylinders lediglich lösbar miteinander verbunden werden müssen.

Besonders einfache Konstruktionsverhältnisse ergeben sich in diesem Zusammenhang, wenn die Schließstege des Mantels durch wenigstens eine haarnadelförmige Klammer zusammengehalten werden, die die Schließstege zwischen ihren beiden Schenkeln aufnimmt. Diese haarnadelförmige Klammer kann von der Stirnseite der Schließstege her auf diese Schließstege aufgeschoben werden, sodass für das Verbinden und Lösen der Schließstege keine zusätzlichen Werkzeuge benötigt werden. Hinsichtlich der Kräfteaufnahme empfiehlt es sich, nicht nur eine Klammer vorzusehen, sondern die beiden randseitigen Schließstege von ihren einander gegenüberliegenden Stirnseiten her mit je einer Klammer zusammenzuhalten.

Damit die beiden Schenkel der haarnadelförmigen Klammer auf den Schließstegen eine entsprechende Führung erfahren und sich nicht in radialer Richtung von den Schließstegen abheben können, können die Schließstege axiale Aufnahmeöffnungen für die Schenkel der Klammer bilden.

Eine andere Möglichkeit der Verbindung der beiden stoßseitigen Teilungsenden besteht darin, ein Scharniergelenk zur zugfesten und von der Winkellage der zu verbindenden Teilungsenden unabhängigen Kupplung der beiden Teilungsenden des Bürstenzylinders vorzusehen. Es muss ja hierfür lediglich der Mantel des Bürstenzylinders in Umfangsrichtung um das Tragrohr geschlossen werden, sodass die gegeneinander in Umfangsrichtung vorstehenden, auf Lücke versetzten Scharnieransätze an den Teilungsenden des Mantels kammartig ineinandergreifen und ein Scharnierbolzen durch die dann fluchtenden Lageraugen der Scharnieransätze eingeführt werden kann.

Der Bürstenbesatz kann dabei reihenweise axial zum Bürstenzylinder ausgerichtete, reihenweise gleichmäßig über den Umfang verteilte Bürstenlamellen umfassen, wobei die zwischen den einander stoßseitig gegenüberliegenden Bürstenlamellenreihen vorgesehenen Scharnieransätze eine dem mantelseitigen Abstand zwischen benachbarten Bürstenlamellenreihen entsprechende Erstreckung in Umfangsrichtung aufweisen. Aufgrund dieser Maßnahmen kann ein in Umfangsrichtung gleichmäßiger Abstand der Bürstenlamellenreihen auch im Bereich des durch die Scharnieransätze gebildeten Scharniergelenks zwischen den Teilungsenden des Mantels sichergestellt werden.

Um die auftretenden Belastungen in Umfangsrichtung aufnehmen zu können, bedarf es einer entsprechenden Auslegung des Scharnierbolzens, was wiederum eine angepasste Dimensionierung der Scharnieransätze nach sich zieht, über die dann die Last auf den Mantel abgetragen werden muss. Zu diesem Zweck können die beiden einander stoßseitig gegenüberliegenden Bürstenlamellenreihen im Bereich der Scharnieransätze einen verstärkten Fußabschnitt bilden, von dem die Scharnieransätze in Umfangsrichtung abstehen.

Um insbesondere das Lösen des Scharnierbolzens zu erleichtern, kann der Scharnierbolzen an einem Ende einen radial abstehenden Handhabungsansatz aufweisen, an dem der Scharnierbolzen erfasst und aus den Lageraugen der Scharnieransätze herausgezogen werden kann.

In der Zeichnung ist der Erfindungsgegenstand beispielsweise dargestellt. Es zeigen
- Fig. 1: eine an ein Förderband angestellte erfindungsgemäße Reinigungsbürste in einem Axialschnitt,
- Fig. 2: die Reinigungsbürste ausschnittsweise in einem Querschnitt in einem größeren Maßstab,
- Fig. 3: einen Schnitt nach der Linie III-III der Fig. 2,
- Fig. 4: den abgewickelten Bürstenzylinder in einer stirnseitigen Ansicht,
- Fig. 5: eine Abwicklung einer Ausführungsvariante des Bürstenzylinders einer erfindungsgemäßen Reinigungsbürste in einer Draufsicht,
- Fig. 6: die Abwicklung des Bürstenzylinders der Fig. 6 in einem Schnitt nach der Linie VI-VI und
- Fig. 7: eine erfindungsgemäße Reinigungsbürste mit einem Bürstenzylinder gemäß den Fig. 5 und 6 ausschnittsweise in einem achsnormalen Schnitt in einem größeren Maßstab.

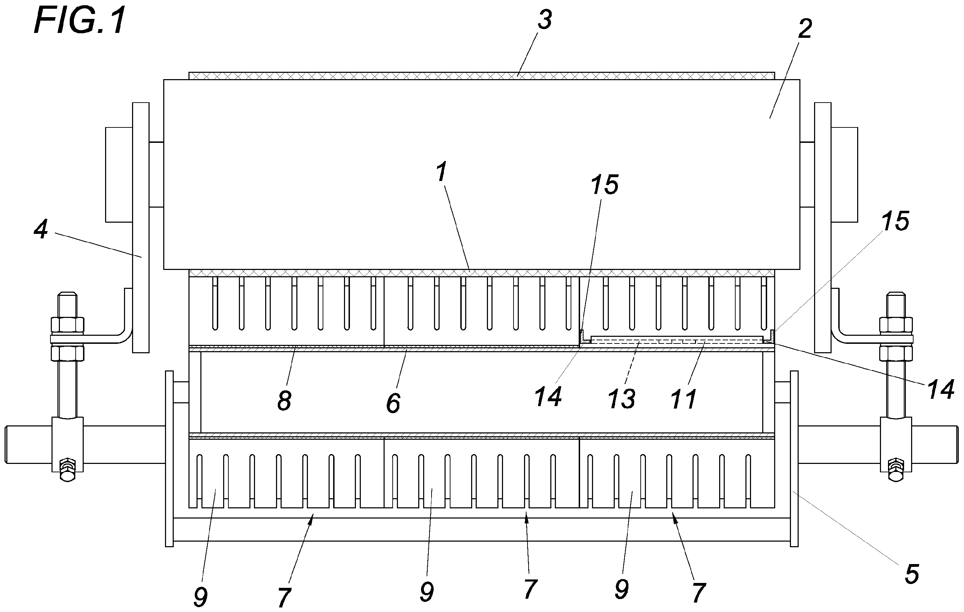

Gemäß der Fig. 1 wird das rücklaufende Trum 1 eines um Umlenkrollen 2 geführten Förderbands 3 mit Hilfe einer Bürstenanordnung gereinigt, die ein am Rahmen 4 des Förderers befestigtes Gestell 5 für die Bürstenanordnung aufweist, in dem ein Tragrohr 6 für mehrere axial hintereinander gereihte Reinigungsbürsten gelagert ist. Dieses Tragrohr 6 kann in üblicherweise angetrieben werden, was jedoch aus Übersichtlichkeitsgründen nicht dargestellt ist.

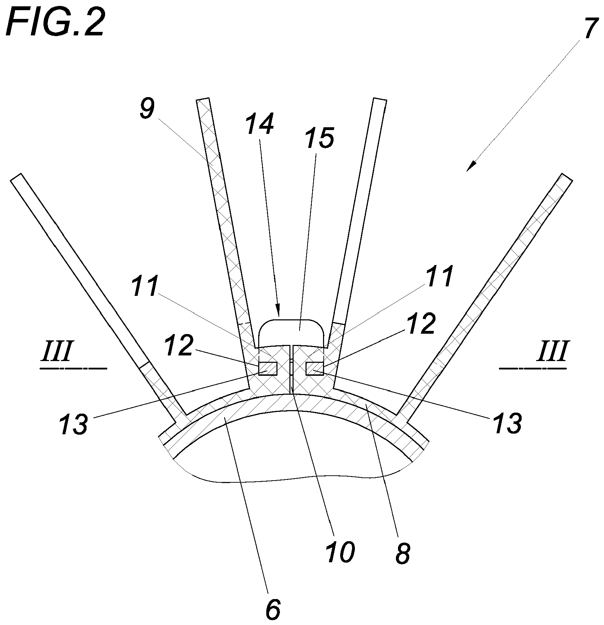

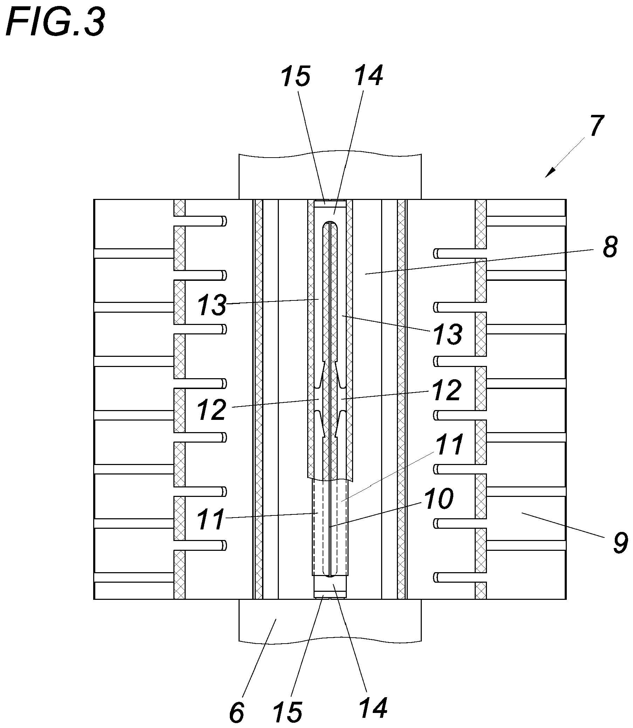

Jede der Reinigungsbürsten weist einen Bürstenzylinder 7 auf, der einen das Tragrohr 6 umschließenden Mantel 8 und einen vom Mantel 8 radial abstehenden Bürstenbesatz 9 umfasst. Dieser Bürstenbesatz 9 bildet gemäß dem Ausführungsbeispiel nach den Fig. 1 bis 4 radial abstehende Abstreiffinger, die in Umfangsrichtung gegeneinander versetzt angeordnet sind, um eine über die gesamte Breite des Förderbands 3 wirksame Reinigung sicherzustellen.

Zum Unterschied zu herkömmlichen Reinigungsbürsten dieser Art ist der Mantel 8 des Bürstenzylinders 7 entlang einer Erzeugenden geteilt, sodass sich bei um das Tragrohr 6 geschlossenem Mantel 8 ein axialer Teilungsstoß 10 ergibt, der von zwei randseitigen Schließstegen 11 begrenzt wird. Die Schließstege 11 bilden axiale Aufnahmeöffnungen 12, in die die Schenkel 13 der haarnadelförmigen Klammern 14 eingreifen, die zur Verbindung der beiden Schließstege 11 von den Stirnseiten her in die Aufnahmeöffnungen 12 eingeschoben werden. Zur einfacheren Handhabung der Klammern 14 sind diese mit einem Betätigungsansatz 15 versehen.

Um den Bürstenzylinder 7 einer Reinigungsbürste wechseln zu können, müssen die haarnadelförmigen Klammern 14 zum Lösen der Schließstege 11 in axialer Richtung aus den Aufnahmeöffnungen 12 herausgezogen werden. Dies ist ohne weiteres möglich, weil die Schließstege 11 zwischen den Abstreiffingern des Bürstenbesatzes 9 verlaufen und bürstenweise gegeneinander in Umfangsrichtung versetzt sind.

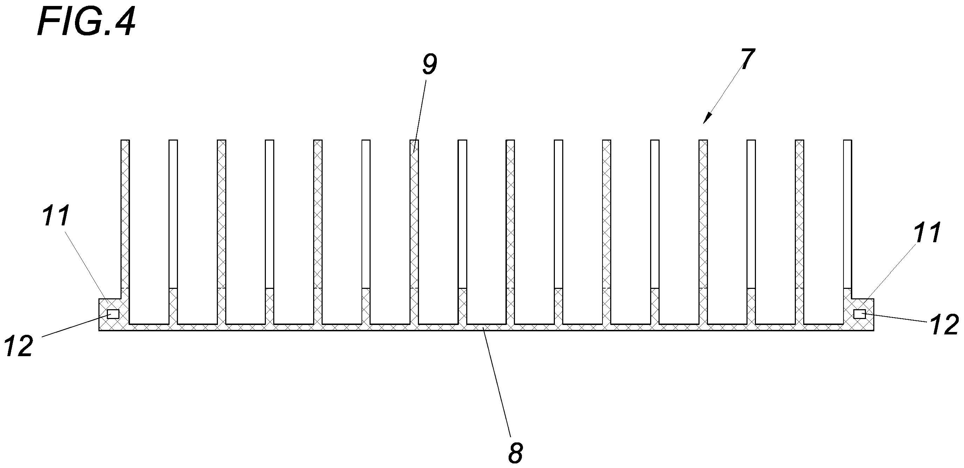

Nach dem Lösen der Verbindung der Schließstege 11 können die Bürstenzylinder 7 unter einem Aufspreizen des Mantels 8 in radialer Richtung vom Tragrohr 6 abgezogen werden, ohne das Tragrohr 6 verlagern zu müssen. Der abgenommene Bürstenzylinder 7 liegt dann in Form einer Abwicklung gemäß der Fig. 4 vor.

Zur Befestigung des Bürstenzylinders 7 am Tragrohr 6 ist in umgekehrter Reihenfolge vorzugehen und zunächst der Bürstenzylinder 7 am Tragrohr 6 in radialer Richtung anzubringen, indem die Schließstege 11 von gegenüberliegenden Umfangsseiten auf das Tragrohr 6 aufgeschoben und unter einem Schließen des Mantels 8 um das Tragrohr 6 zusammengeführt werden. Nach einem Einschieben der haarnadelförmigen Klammern 14 in die Aufnahmeöffnungen 12 der Schließstege 11 ist der Montagevorgang beendet.

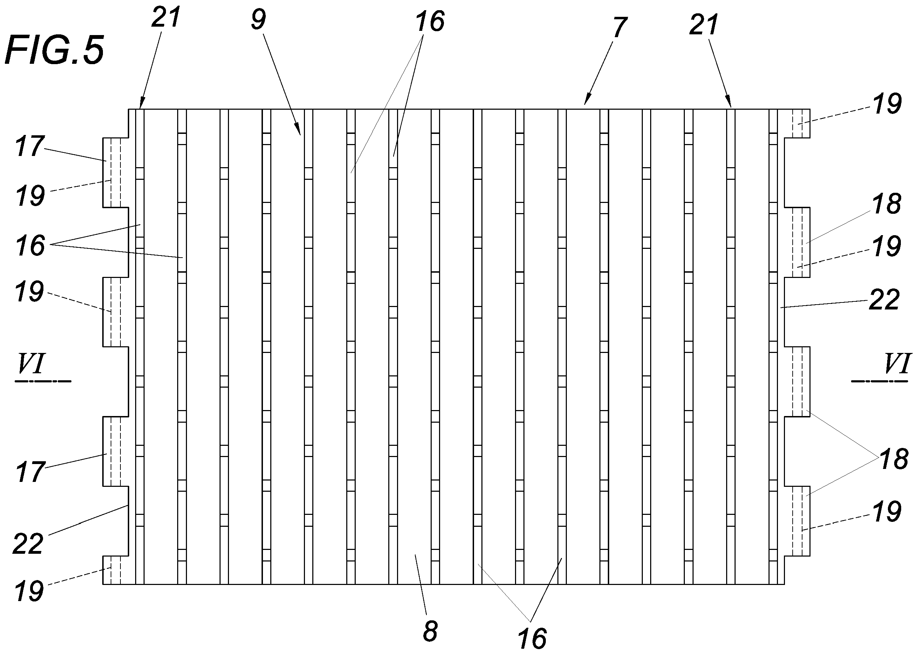

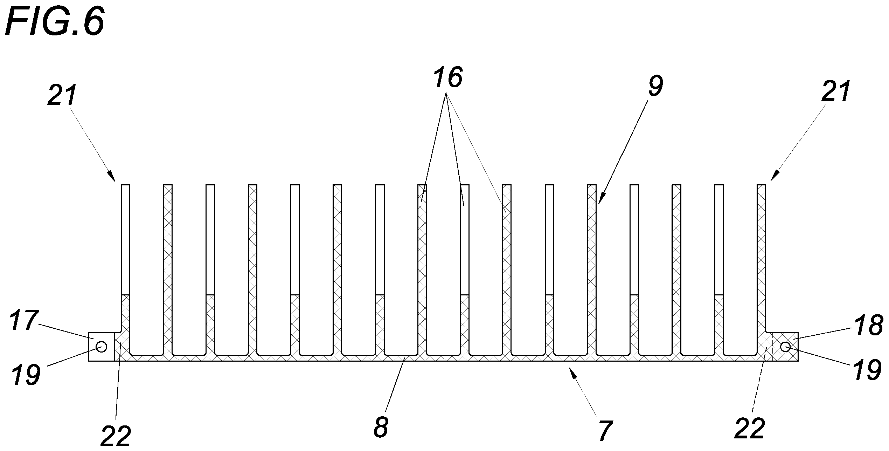

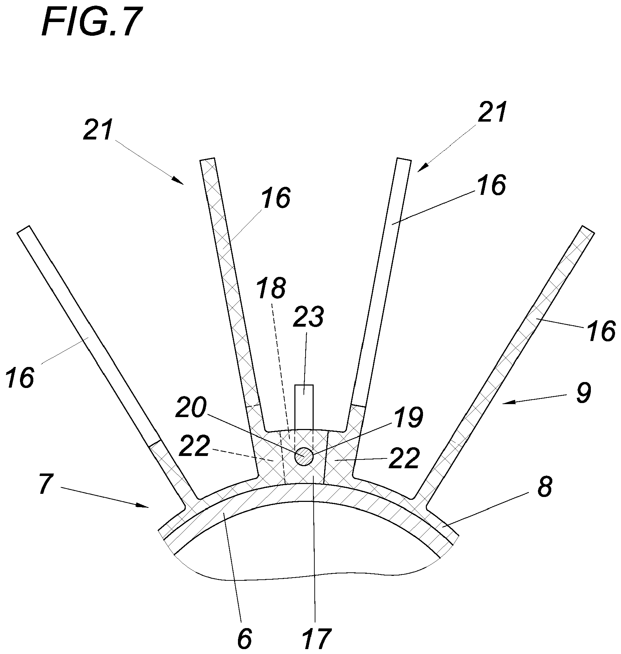

Die Reinigungsbürste gemäß der Ausführungsvariante nach den Fig. 5 bis 7 weist einen Mantel 8 und einen vom Mantel 8 radial abstehenden Bürstenbesatz 9 mit axial zum Bürstenzylinder 2 ausgerichteten, reihenweise gleichmäßig über den Umfang verteilten Bürstenlamellen 16 auf, die reihenweise gegeneinander versetzt angeordnet sind, um eine über die gesamte Breite des Förderbands wirksame Reinigung sicherzustellen. Zum Unterschied zu der Ausführungsform nach den Fig. 1 bis 4 ist der Mantel 8 und an den Teilungsenden mit gegeneinander auf Lücke versetzten Scharnieransätzen 17, 18 versehen, die gegeneinander in Umfangsrichtung vorstehen und beim Schließen des Mantels 8 um das Tragrohr 6 kammartig ineinandergreifen. Da diese Scharnieransätze 17, 18 bei geschlossenem Mantel 8 in axialer Richtung fluchtende Lageraugen 19 ausbilden, können die Scharnieransätze 17, 18 mithilfe eines Scharnierbolzens 20 nach Art eines Scharniergelenks verbunden werden. Hierfür braucht der Scharnierbolzen 20 lediglich in die fluchtenden Lageraugen 19 der Scharnieransätze 17, 18 eingeführt zu werden.

Damit eine den Belastungsanforderungen genügende Anbindung der Scharnieransätze 17, 18 an den Bürstenzylinder 7 mit einfachen konstruktiven Mitteln sichergestellt werden kann, können die einander stoßseitig gegenüberliegenden Bürstenlamellenreihen 21 im Bereich der Scharnieransätze 17, 18 einen verstärkten Fußabschnitt 22 bilden.

Weisen die zwischen den einander stoßseitig gegenüberliegenden Bürstenlamellenreihen 21 vorgesehenen Scharnieransätze 17, 18 eine dem mantelseitigen Abstand zwischen benachbarten Bürstenlamellenreihen entsprechende Erstreckung in Umfangsrichtung auf, so ergibt sich auch im Bereich des die beiden Trennenden des Mantels 8 verbindenden Scharniergelenks ein Abstand zwischen den beiden endseitigen Bürstenlamellenreihen 21, wie er auch zwischen den übrigen Lamellenreihen gegeben ist.

Um den Bürstenzylinder 7 der Reinigungsbürste wechseln zu können, muss der Scharnierbolzen 20 aus den Lageraugen 19 der Scharnieransätze 17, 18 gezogen werden. Zu diesem Zweck kann der Scharnierbolzen 20 an einem Ende mit einem radial abstehenden Handhabungsansatz 23 versehen sein, der einfach durch eine hakenartige Abwinkelung des Bolzenendes gebildet sein kann. Nach dem Entfernen des Scharnierbolzens 20 kann der Bürstenzylinder 7 unter einem Aufspreizen des Mantels 8 in radialer Richtung vom Tragrohr 6 abgezogen werden, ohne das Tragrohr 6 verlagern oder ausbauen zu müssen. Der abgenommene Bürstenzylinder 7 liegt dann in Form der Abwicklung vor.

## Patentansprüche

1. Reinigungsbürste für ein Förderband (3) mit einem Tragrohr (6) und einem Bürstenzylinder (7), der einen das Tragrohr (6) umschließenden Mantel (8) und einen von diesem Mantel (8) abstehenden Bürstenbesatz (9) umfasst, **dadurch gekennzeichnet, dass** der Mantel (8) des Bürstenzylinders (7) entlang einer Erzeugenden geteilt ist und entweder entlang des axialen Teilungsstoßes (10) miteinander lösbar verbundene Schließstege (11) aufweist oder an den einander gegenüberliegenden Teilungsenden gegeneinander auf Lücke versetzte, kammartig ineinandergreifende Scharnieransätze (17, 18) bildet, die in axialer Richtung fluchtende Lageraugen (19) zur lösbaren Aufnahme eines Scharnierbolzens (20) aufweisen.

2. Reinigungsbürste nach Anspruch 1, **dadurch gekennzeichnet, dass** die Schließstege (11) des Mantels (8) durch wenigstens eine haarnadelförmige Klammer (14) zusammengehalten sind, die die Schließstege (11) zwischen ihren Schenkeln (13) aufnimmt.

3. Reinigungsbürste nach Anspruch 2, **dadurch gekennzeichnet, dass** die Schließstege (11) axiale Aufnahmeöffnungen (12) für die Schenkel (13) der Klammer (14) bilden.

4. Reinigungsbürste nach Anspruch 1, **dadurch gekennzeichnet, dass** der Bürstenbesatz (9) reihenweise axial zum Bürstenzylinder (7) ausgerichtete, reihenweise gleichmäßig über den Umfang verteilte Bürstenlamellen (16) umfasst und dass die zwischen den einander stoßseitig gegenüberliegenden Bürstenlamellenreihen (21) vorgesehenen Scharnieransätze (17, 18) eine dem mantelseitigen Abstand zwischen benachbarten Bürstenlamellenreihen entsprechende Erstreckung in Umfangsrichtung aufweisen.

5. Reinigungsbürste nach Anspruch 4, **dadurch gekennzeichnet, dass** die beiden einander stoßseitig gegenüberliegenden Bürstenlamellenreihen (21) im Bereich der Scharnieransätze (17, 18) einen verstärkten Fußabschnitt (22) bilden.

6. Reinigungsbürste nach Anspruch 4 oder 5, **dadurch gekennzeichnet, dass** der Scharnierbolzen (20) an einem Ende einen radial abstehenden Handhabungsansatz (23) aufweist.
